# EUROPÄISCHE PATENTSCHRIFT

(11) **EP 0 607 399 B1**
(45) Veröffentlichungstag und Bekanntmachung des Hinweises auf die Patenterteilung: **07.01.1998**
(21) Anmeldenummer: 93917689.7
(22) Anmeldetag: 29.07.1993
(51) Int. Cl.: B29B 9/06

(54) **VORRICHTUNG ZUM GRANULIEREN VON KUNSTSTOFFEN**
DEVICE FOR GRANULATING PLASTICS
DISPOSITIF POUR GRANULER DES MATIERES PLASTIQUES

(30) Priorität: 08.08.1992 DE 9210621 U
(43) Veröffentlichungstag der Anmeldung: 27.07.1994
(73) Patentinhaber: TRENDELKAMP, Josef, D-48356 Nordwalde (DE)
(72) Erfinder: TRENDELKAMP, Josef, D-48356 Nordwalde (DE)
(74) Vertreter: Hoffmeister, Helmut, Dr. Dipl.-Phys.
(86) Internationale Anmeldenummer: EP9302021
(87) Internationale Veröffentlichungsnummer: WO9403314

(56) Entgegenhaltungen:
- CH-A- 530 852
- DE-A- 1 454 863
- DE-A- 3 212 409
- FR-A- 1 555 013
- FR-A- 2 367 586
- US-A- 4 300 877

## Beschreibung

Die Erfindung betrifft eine Vorrichtung zum Granulieren von Kunststoffen, aufweisend
- ein Schneidwerkzeug, das die aus Austrittsöffnungen eines Extruders austretenden Stränge des Kunststoffes granuliert,
- eine Zuführungsleitung für Wasser als Kühlmedium, das das Schneidwerkzeug und die austretenden Stränge des Kunststoffes kühlt,
   wobei die Zuführungsleitung zum Schneidwerkzeug innerhalb einer trichterförmigen Erweiterung vor dem Schneidwerk endet,
   wobei das Schneidwerkzeug ein ringförmiger Messerträger mit Messern ist und der Messerträger den Abschlußrand der trichterförmigen Erweiterung ausbildet, und
   wobei das Wasser zugleich Transportmedium für das abgeschlagene Granulat ist, und
- eine Austrittsöffnung für Granulat und Wasser.

Eine Vorrichtung der eingangs genannten Art ist aus der US-A-4 300 877 bekannt. Sie besteht aus einem Trägerkörper besteht, der an seiner Außenseite Austrittsöffnungen aufweist. Die Austrittsöffnungen sind mit Zuführungskanälen für den Durchfluß von flüssigem Kunststoff verbunden, der einen Hohlkörper trägt. Er besteht aus einem hohlzylindrischen Stil, der in einen Trichter übergeht. Im Trichter ist eine Platte mit segmentförmigen Ausnehmungen angeordnet, die auf die Welle geschraubt ist. Der Trichter geht an seinem Rand in eine Ringscheibe über, auf der Schneidmesser angeordnet sind. Der hohlzylindrische Stil des Hohlkörpers rotiert um eine statisch angeordnete Wasserzuführungsleitung.

Nachteilig ist, daß in der Platte Zwischenstege zwischen den segmentförmigen Ausnehmungen angeordnet sind und der hohlzylindrische Stil um die Eingangsleitung rotiert. Dadurch trifft über die Eingangsleitung das axillar eintretende Wasser gegen das Zentrum der Platte. Nur ein Teil des Wassers wird durch die Segmente hindurchgelassen und büßt damit an Kühlwirkung für die Schneidmesser und an Transportwirkung gegenüber dem abgeschlagenen Granulat ein. Die Stege zwischen den Segmenten verursachen einen weiteren Wirkungsverlust, indem sie den seitwärtigen Wasserstrom bei einer Rotation des Hohlkörpers ständig unterbrechen.

Aus der CH-A-530 852 ist ein Granulator für eine Trockengranulierung bekannt, bei dem vor einer Sieblochplatte Schneidmesser rotieren. Die Schneidmesser sind an einer Scheibe eines Schneidkörpers befestigt, der trichterförmig ausgebildet ist und vor einem zylinderförmigen Ausgangsrohr rotiert, das auf einem ortfesten Gehäuseteil befestigt ist. Die Scheibe des Schneidkopfes weist im Bereich der Schneidmesser je einen Ausgangsschlitz auf.

Der Schneidkörper ist allerdings nur deshalb trichterförmig ausgebildet, damit das durch das Ausgangsrohr angesaugte Granulat gesammelt wird. Darüberhinaus wird die Saug- und Kühlwirkung durch die Scheibe und die in ihr vor den Schneidmessern eingebrachten Schlitze gemindert. Die Rotation der Scheibe und die der Schneidmesser wirkt der Saugwirkung des Luftstromes ebenfalls entgegen. Hierdurch besteht die Gefahr, daß sich das Granulat in dem Schlitz festsetzen kann und die Saug- und Kühlwirkung weiter herabgesetzt wird.

In DE-B-2 646 309 wird eine Granuliervorrichtung für thermoplastische Kunststoffe, die auf einem rotierenden Schneidwerkzeug besteht, das direkt vor Extruderöffnungen rotiert und aus einem Extruder austretende Stränge eines Kunststoffes abschlägt, beschrieben. Mit einer unten am Gehäuse des Granulatorgehäuses angeordneten Zuführung wird Wasser zum Kühlen des Schneidwerkzeuges zugeführt. Die Ausleitung des Wassers, das zugleich Transportmedium für das abgeschlagene Granulat ist, erfolgt nach oben über eine Austrittsöffnung zu einem Granulatabschneider. Dadurch, daß die Strömung von der Wasserzufuhr zu Austrittsöffnungen von Granulat und Wasser zum einen nicht mit der Kunststoff-Führung übereinstimmt und zum anderen gegen die Schwerkraft gerichtet ist, kann es zu Störungen im Granulieren und beim Abtransport kommen.

Aus der DE-A-1 454 863 ist eine Vorrichtung zum Schneiden, Kühlen und Wegtransport eines Granulats bekannt. Stränge aus plastischem Kunststoff, die aus einer gelochten Extruderplatte austreten, werden von einem Schneidwerkzeug abgeschlagen. Die gerade Welle für den Messerantrieb ist hohl ausgeführt und an gebogene Rohre angeschlossen, die an den Messern enden. Durch diese Rohre wird das in den Messerarm eintretende Granulat mit Wasserspülung wegtransportiert. Unten am schneckenartig ausgeführten Gehäuse ist eine Öffnung angebracht, durch die das Wasser und das Granulat abgeleitet werden. Auch wenn das Granulieren, Kühlen und der Abtransport des Wasser- und Granulatgemisches einer befriedigenden Lösung zugeführt sind, wird die Vorrichtung durch die beschränkte Anzahl von Austrittsöffnungen aus einer gelochten Extruderplatte in ihrer Kapazität begrenzt. Darüber hinaus ist das Anbringen der gebogenen Rohre kompliziert. Nur mit großem Aufwand sind die Unwuchten beherrschbar, die durch das aus dem Rohr herausgeschleuderte Wasser entstehen können. Außerdem kann die direkte Zuführung des Kühlmittels an die Kunststoffaustrittsöffnungen zu einer solchen Abkühlung führen, daß die Kunststoffstränge in der Düsenführung erstarren.

Weiterhin ist aus der DE-A 3 212 409 eine Vorrichtung bekannt, die einen Extruder mit einem von Heizkörpern umgebenen Zylinder enthält, der vorn in einer runden Platte mit Düsenöffnungen endet. Vor den Düsenöffnungen rotieren eine mit einer Hohlwelle verbundene Schneidscheibe, deren Schneidklingen Kühlwasseraustrittsöffnungen aufweisen. Durch das Erwärmen des Kunststoffes wird zwar ein Erstarren verhindert, aber das von der Schneidklinge auf die Düsenöffnung tretende Wasser drückt das Granulat auf die Platte, wodurch dessen Abfluß und die des Wasser- und Granulatgemisches behindert wird.

Der Erfindung liegt die Aufgabe zugrunde, eine Vorrichtung zum Granulieren von Kunststoff der eingangs genannten Art so weiter zu entwickeln, daß das Schneidwerkzeug ausreichend gekühlt, der Kunststoff ohne Behinderung granuliert und das Gemisch aus Granulat und Wasser einfach abtransportiert wird.

Erreicht wird dieses Ziel dadurch,
- daß ein Teil der Zuführungsleitung in die trichterförmige Erweiterung übergeht und um eine Achse drehbar angeordnet ist und
- daß die Messer über den Abschlußrand der trichterförmigen Erweiterung herausragend angeordnet sind.

Die mit der Erfindung erzielten Vorteile bestehen insbesondere darin, daß das in die Wasserzuführung eintretende Wasser zu seiner Längsströmung einen Drall erfährt. Dieser Drall wird immer größer, je näher das Wasser dem Schneidwerkzeug kommt. Erhöht wird dieser Effekt noch durch den sich vergrößernden Durchmesser des Trichters, so daß sich das Wasser beinahe nur außenseitig bewegt. Durch diese Wasserbewegung wird das Schneidwerkzeug gekühlt, ohne daß dabei der Kunststoff erstarrt. Außerdem werden die austretenden Kunststoffstränge leicht nach außen gebogen und das Granulat mit dem Wasser bei Unterstützung durch das Schneidwerkzeug nach außen geschleudert. Das an der außenliegenden Wand des Extruders abfließende Gemisch behindert so in keiner Weise den Bereich zwischen Austrittsöffnung und Schneidwerkzeug.

Es ist darüber hinaus vorteilhaft die Austrittsöffnungen für das Wasser-Granulat-Gemisch im Bereich zum Schneidwerkzeug anzuordnen. Dadurch können Granulat und Wasser unter Ausnutzung der Schwerkraft schnellstens abfließen. Ihre Austrittsöffnung sollte dabei in dem unteren Punkt des Gehäuses angebracht werden, der strömungstechnisch am günstigsten ist. Das kann zur Folge haben, daß die Austrittsöffnung nicht genau lotrecht unter der Rotationsachse zwischen Wassereintrittsöffnung und Schneidwerkzeug angeordnet ist.

Die Erfindung wird nachstehend an einem Ausführungsbeispiel näher erläutert. In der Zeichnung zeigen in
- Figur 1:: Eine Vorrichtung zum Granulieren von Kunststoff in einer teilgeschnittenen, perspektivischen, schematischen Darstellung,
- Figur 2:: Einen Schnitt durch eine Vorrichtung gemäß Figur 1 entlang der Linie II - II.

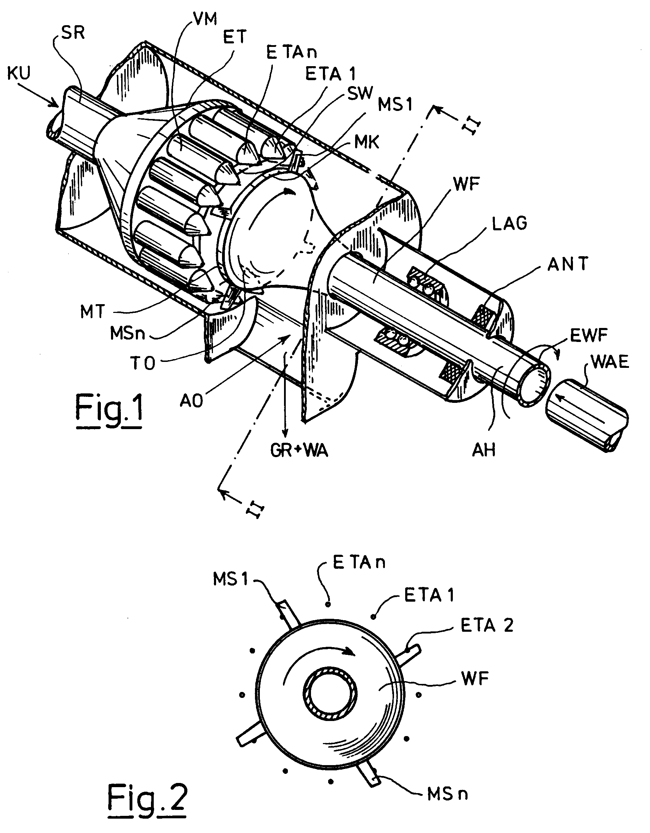

In Fig. 1 ist ein Teil eines Extruders ET dargestellt, dessen Schneckenrohr SR in ein Vielfach-Mundstück VM einmündet, das zahlreiche Extruderaustrittsdüsen mit je einer Austrittsöffnung ETA1, ... ETAn trägt. Aus dem Schneckenrohr tritt eine Kunststoff-Schmelze KU in das Vielfach--Mundstück VM ein. Aus jeder Austrittsöffnung ETA1, ... ETAn tritt ein Strang geschmolzener, aber nach dem Austreten sofort erstarrender Kunststoffstrang aus. Vor dem vollständigen Erstarren wird der Kunststoffstrang gehäckselt; die kleinen geschnittenen Stücke erstarren zu Granulat GR. Bekannt und vorteilhaft ist es, den Kunststoffstrang mit einer Geschwindigkeit von etwa 0,2 m/s bis 0,6 m/s aus den Extruderaustrittsöffnungen ETA1, ... ETAn austreten zu lassen.

Ein Schneidwerkzeug MK, bestehend aus einem ringförmigen Messerträger MT mit peripher angeordneten Messern MS1, ... MSn ist so axial rotierbar vor der Stirnwand des Vielfach-Mundstückes VM angeordnet, daß die Messer MS unmittelbar vor den Extruderaustrittsöffnungen vorbeistreichen. Dies ist auch in Fig. 2 dargestellt.

Der ringförmige Messerträger MT bildet den Abschlußrand einer trichterförmigen Öffnung TO, mit der er einstückig und rotierbar verbunden ist. Die Öffnung TO wiederum konvergiert zu einer Wasserzuführungsleitung WF, die als Rotorelement in einem Gehäuse gelagert ist. Am Ende EWF der Wasserzuführungsleitung WF ragt diese aus dem Gehäuse heraus ist über eine Drehdichtung (nicht dargestellt) wasserdicht mit einer Wasseranschlußleitung WAE verbunden. Von der Wasseranschlußleitung WAE kommend kann Kühl- und Spülwasser bis zur Öffnung TO geführt werden.

Die Messer MS1, ... MSn und der austretende Kunststoffstrang werden durch das Wasser gekühlt. Wie die Fig. 1 besonders deutlich zeugt, hat das Ende der Wasserzuführungsleitung WF eine trichterförmig sich öffnende Gestalt. Die Trichteröffnung weitet sich zum Schneidwerkzeug MK aus, d.h., die Wasserzuführungsleitung WF endet ähnlich wie bei einer Trompete. Die Wände der Wasserzuführungsleitung können aber auch von der Wasserausschlußleitung zu den Messern MS1, ... MSn hin im Querschnitt wie eine Kegelstumpf ausgeführt werden.

Erfindungswesentlich ist, daß durch die trichterförmig erweiterte Öffnung TO der Wasserzuführungsleitung WF und ihre schnelle Rotation um eine Achse AH mit etwa 1000 bis 4000 U/min das Wasser WA im wesentlichen an den Innenwänden der trichterförmigen Öffnung entlangströmt, da eine Zentrifugalkraft wirkt. Gleichzeitig wird dem Wasser WA eine Drallströmung überlagert. Das Wasser WA trifft demnach mit erheblicher Turbulenz mit tangentialer Komponente auf die Messer MS1, ... MSn und auf die Kunststoffstränge. Es kühlt die vorgenannten Elemente und schwemmt das entstandene Granulat durch den zwischen Messerträger MT und Stirnwand SW liegenden Spalt nach außen.

Die Wasserzuführungsleitung WF dreht sich dabei in Lagerungen LAG; ihre Drehzahl kann über einen Antrieb ANT gesteuert werden. Anstelle eines elektromotorischen Antriebs kann beispielsweise auch ein Hydromotor oder ein Wasser-Turbinenantrieb verwendet werden.

Das in die Wasserzuführungsleitung WF axial einströmende Wasser WA erhält durch starke Rotation der trichterförmigen Öffnung TO eine zusätzliche rotierende Bewegungskomponente. Je weiter das Wasser WA in Richtung des Schneidwerkzeuges MK fließt, umso stärker wird diese. Das hat zur Folge, daß das Wasser WA letztendlich mit starker, nach außen fließender Strömung auf die Messer MS1, ... MSn des Schneidwerkzeuges MK trifft. Dadurch wird jedes einzelne Messer MS1, ... MSn ausreichend gekühlt. Darüber hinaus wird der aus der Extruderaustrittsdüse ETA1, ... ETAn austretende Kunststoffstrang kraftvoll mit Wasser WA nach außen gedrückt. Die Schneidbahn wird dadurch immer frei gehalten von geschnittenem Granulat GR.

Mit der Richtungsänderung des Wassers wird also ein doppelter Effekt erreicht. Zum einen werden die Messer MS1, ... MSn ausreichend gekühlt, ohne daß dabei der aus den Extruderaustrittsdüsen austretende Kunststoff KU innerhalb der Extruderöffnungen erstarrt; zum anderen wird der Bereich vor den Extruderaustrittsöffnungen ETA1, ... ETAn immer frei von Kunststoff, insbesondere Granulat GR gehalten.

Die rotierenden Messer MS1, ... MSn des Schneidwerkzeuges MK und das rotierend strömende Wasser WA sorgen dafür, daß das Granulat GR schnell aus diesem Bereich weggefördert wird. Vorteilhaft wirkt sich dabei aus, daß das heruntergeschwemmte Gemisch aus Granulat GR und Wasser WA aus einer Austrittsöffnung AO abfließen kann. Diese Austrittsöffnung AO sollte, um besser wirksam zu sein, nicht genau senkrecht unter der Achse AH angeordnet sein.

## Patentansprüche

1. Vorrichtung zum Granulieren von Kunststoffen, aufweisend:
- ein Schneidwerkzeug (MK), das die aus Austrittsöffnungen (ETA1, ... ETAn) eines Extruders (ET) austretenden Stränge des Kunststoffes (KU) granuliert,
- eine Zuführungsleitung für Wasser (WA) als Kühlmedium, das das Schneidwerkzeug (MK) und die austretenden Stränge des Kunststoffes (KU) kühlt,
wobei die Zuführungsleitung (WF) zum Schneidwerkzeug (MK) innerhalb einer trichterförmigen Erweiterung vor dem Schneidwerk (MK) endet,
wobei das Schneidwerkzeug (MK) ein ringförmiger Messerträger (MT) mit Messern (MS1, ... MSn) ist und der Messerträger (MT) den Abschlußrand der trichterförmigen Erweiterung (TO) ausbildet, und
wobei das Wasser (WA) zugleich Transportmedium für das abgeschlagene Granulat (GR) ist, und
- eine Austrittsöffnung (AO) für Granulat und Wasser (GR + WA),
dadurch gekennzeichnet,
- daß ein Teil der Zuführungsleitung (WF) in die trichterförmige Erweiterung (TO) übergeht und um eine Achse (AH) drehbar angeordnet ist und
- daß die Messer (MS1, ... MSn) über den Abschlußrand der trichterförmigen Erweiterung (TO) herausragend angeordnet sind.

2. Vorrichtung nach Anspruch 1, dadurch gekennzeichnet, daß die trichterförmige Erweiterung (TO) der Zuführungsleitung (WF) eine kegelstumpf- und/oder trompetenartige Gestalt hat.

3. Vorrichtung nach Anspruch 1 oder 2, dadurch gekennzeichnet, daß die Austrittsöffnung (AO) für das Granulat-Wasser-Gemisch unterhalb des Spaltes zwischen dem Ende der Zuführungsleitung (WF) und der Außenseite des Schneidwerkzeuges (MK) angeordnet ist.

## Claims

1. An apparatus for granulating plastics materials, comprising:
- a cutting tool (MK) which granulates the strands of the plastics material (KU) which emerge from exit openings (ETA1, ... ETAn) of an extruder (ET),
- a feed line for water (WA) as cooling medium which cools the cutting tool (MK) and the emerging strands of the plastics material (KU), the feed line (WF) to the cutting tool (MK) ending within a funnel-shaped widened section before the cutting tool (MK),
the cutting tool (MK) being an annular knife holder (MT) with knives (MS1, ... MSn) and the knife holder (MT) forming the terminal edge of the funnel-shaped widened section (TO), and the water (WA) at the same time being the transport medium for the granules (GR) knocked off, and
- an exit opening (AO) for granules and water (GR + WA),
characterised in that
- part of the feed line (WF) merges into the funnel-shaped widened section (TO) and is arranged to rotate about an axis (AH) and
- that the knives (MS1, ... MSn) are arranged projecting beyond the terminal edge of the funnel-shaped widened section (TO).

2. An apparatus according to Claim 1, characterised in that the funnel-shaped widened section (TO) of the feed line (WF) has a truncated cone-like and/or trumpet-like shape.

3. An apparatus according to Claim 1 or 2, characterised in that the exit opening (AO) for the granule/water mixture is located beneath the gap between the end of the feed line (WF) and the outside of the cutting tool (MK).

## Revendications

1. Dispositif de granulation de matières plastiques, comprenant:
un outil de coupe (MK) qui granule les brins de la matière plastique (KU) qui sortent des ouvertures de sortie (ETA1, ... ETAn) d'une extrudeuse (ET),
une conduite d'amenée d'eau (WA) servant de milieu refroidissant, qui refroidit l'outil de coupe (MK) et les brins de la matière plastique (KU) sortants, la conduite d'amenée (WF) à l'outil de coupe (MK) se terminant à l'intérieur d'un élargissement en forme de trémie devant le mécanisme de coupe (MK),
l'outil de coupe (MK) étant un porte-couteaux (MT) de forme annulaire pourvu de couteaux (MS1, ... MSn) et le porte-couteaux (MT) constituant la bordure de l'élargissement (TO) en forme de trémie, et l'eau (WA) étant à la fois un moyen de transport pour le granulat séparé (GR), et
une ouverture de sortie (AO) pour le granulat et l'eau (GR + WA),
caractérisé
en ce qu'une partie de la conduite d'amenée (WF) se transforme en l'élargissement (TO) en forme de trémie et est agencée à rotation autour d'un axe (AH) et
en ce que les couteaux (MS1, ... MSn) sont agencés en saillie au-dessus de l'élargissement (TO) en forme de trémie.

2. Dispositif selon la revendication 1, caractérisé en ce que l'élargissement (TO) en forme de trémie de la conduite d'amenée (WF) est en forme de tronc de cône et/ou de trompette.

3. Dispositif selon la revendication 1 ou 2, caractérisé en ce que l'ouverture de sortie (AO) du mélange granulat-eau est disposée au-dessous de l'interstice entre l'extrémité de la conduite d'amenée (WF) et le côté extérieur de l'outil de coupe (MK).
